# EUROPEAN PATENT SPECIFICATION

(11) **EP 0 419 246 B1**
(45) Date of publication and mention of the grant of the patent: **15.11.1995**
(21) Application number: 90310276.2
(22) Date of filing: 19.09.1990
(51) Int. Cl.: H04N 5/232

(54) **Video camera apparatus**
Videokamera
Caméra vidéo

(30) Priority: 20.09.1989 JP 243670/89
(43) Date of publication of application: 27.03.1991
(73) Proprietor: SONY CORPORATION, Tokyo 141 (JP)
(72) Inventor: Yamada, Yukio, c/o Patents Division, Shinagawa-ku, Tokyo 141 (JP); Furukawa, Akio, c/o Patents Division, Shinagawa-ku, Tokyo 141 (JP); Isono, Kazuki, c/o Patents Division, Shinagawa-ku, Tokyo 141 (JP)
(74) Representative: Cotter, Ivan John

(56) References cited:
- US-A- 4 924 246
- PATENT ABSTRACTS OF JAPAN, vol. 13, no. 109 (E-727)[3457], 15th March 1989;& JP-A-63 280 578 (ASAHI RES. K.K.) 17-11-1988

## Description

This invention relates to video camera apparatus. More particularly, but not exclusively, the invention is directed to a light apparatus for use with a video camera apparatus such as a video camera or a video tape recorder (VTR) having a built-in camera.

It has previously been proposed that a video light apparatus for a video camera or a video tape recorder having a built-in type camera should include an illumination lamp which is powered or driven by a commercially-available AC voltage. The power requirement of such video light apparatus is high, for example 150 to 300 W, to provide high brightness lighting. Moreover, this video light apparatus has the disadvantage that it can only be used indoors.

Other previously proposed video light apparatus have overcome the above-described disadvantage using a power source providing DC power in the amount of 50 W to 100 W. When the lamp of this video light apparatus is driven by DC voltage, the DC voltage is supplied from a battery pack in which many batteries are accommodated. The battery pack is heavy and the video light apparatus and the battery pack must be interconnected via a cord in order to power the video light apparatus. For this reason, it has been proposed to drive a lamp of about 5 W to 29 W with a small battery. Japanese Patent Application Publication No JP-A-62 67974 describes such previously-proposed video light apparatus.

According to JP-A-62 67974, a video light apparatus having one or more small batteries or dry cells incorporated therein is detachably attached to a video camera body and the video light apparatus is provided with a switch for turning its lamp ON or OFF. In this video camera apparatus, the user must operate the lamp ON/OFF switch before taking a picture with the video camera. This operation of turning ON the lamp to take a picture is cumbersome to the user. Furthermore, various operations of the video camera have to be carried out after the video light apparatus has been switched ON. Therefore, this previously proposed camera apparatus has the substantial disadvantage that the battery power is not efficiently consumed by the video camera.

PATENT ABSTRACTS OF JAPAN, Vol 13, No 109 (E-727) [3457], 15 March 1989 and corresponding Japanese Patent Application Publication No JP-A-63 280 578 (on which the pre-characterising part of claim 1 hereof is based) disclose a video camera apparatus comprising a video camera body (10) and a video light apparatus (30). A recording button (14) is mounted to the camera body for controlling the video camera apparatus; more specifically for turning on and off a recording section (18). A synchronising circuit (16) is responsive to operation of the switch, and power switching means (36) is arranged in the video light apparatus for controlling energisation of the video light apparatus in response to detection by the synchronising circuit of operation of the switch.

According to the present invention there is provided a video camera apparatus comprising: a video camera body; a video light apparatus; a switch mounted to the camera body for controlling the video camera apparatus; a detection circuit responsive to operation of said switch; and power switching means arranged in the video light apparatus for controlling energisation of the video light apparatus in response to detection by said detection circuit of operation of said switch; characterised in that: the video light apparatus is detachably connected to the video camera body; said switch is a standby switch for setting a standby mode of the video camera apparatus; a remote control unit is detachably connected to the video camera body for producing a remote control standby signal; standby switch control means is responsive to said remote control standby signal for actuating said standby switch; said detection circuit is a standby mode detection circuit and is responsive to said standby switch for detecting said standby mode of the video camera apparatus; and said power switching means is operative to control energisation of the video light apparatus in response to said standby mode detection circuit detecting said standby switch being set in said standby mode.

Preferred embodiments of the invention described hereinbelow provide an improved video camera apparatus which can avoid or at least reduce the aforenoted shortcomings and disadvantages encountered with the previously proposed video cameras. More specifically, by using the preferred video camera apparatus the user is free of the cumbersome operation of turning on a power switch of a video light apparatus whenever the user takes a picture. In the preferred video camera apparatus, the power of a DC voltage source can be efficiently consumed and the video light apparatus can be operated for a longer period of time.

The invention will now be further described, by way of illustrative and non-limiting example, with reference to the accompanying drawings, in which like references are used to identify the same or similar parts throughout, and in which:
Figure 1 is a schematic block diagram of a video camera apparatus according to a first embodiment of the invention;
Figure 2 is an elevational view illustrating the external appearance of the video camera apparatus according to the first embodiment of the invention;
Figure 3 is a front perspective view of a first embodiment of a video light apparatus that can be used in a video camera apparatus in accordance with the invention;
Figure 4 is a rear perspective view of the video light apparatus of Figure 3;
Figure 5A is an elevational view in cross section taken through a section line A-A in Figure 4;
Figure 5B is a bottom view illustration a slide plug and control terminals of the video light apparatus as shown in Figure 5A;
Figure 6 is a schematic diagram of a video camera apparatus according to a second embodiment of the invention; and
Figure 7 is a schematic diagram showing an example of a DC voltage source protecting circuit that can be used in video camera apparatus in accordance with the invention.

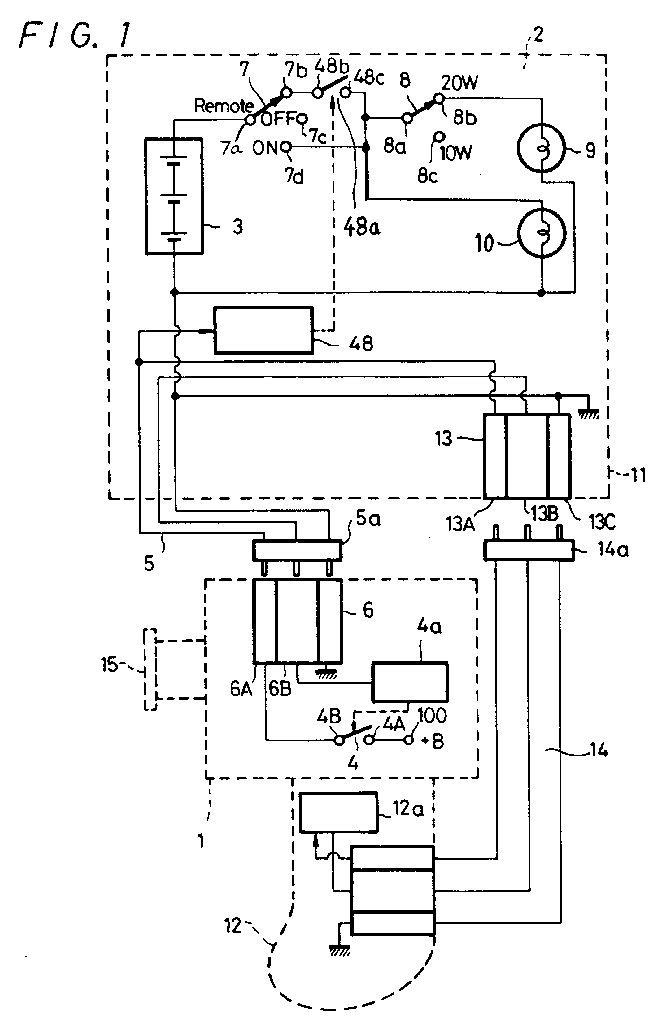

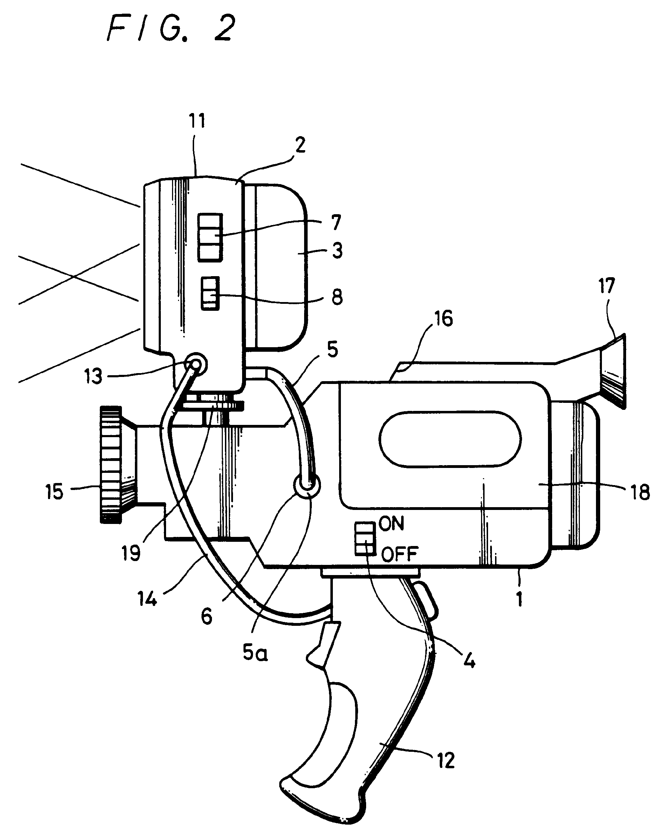

Figure 1 shows the circuit arrangement of a video camera apparatus according to a first embodiment of the invention, and Figure 2 shows the external appearance of the video camera apparatus, in which a video light apparatus 2 is mounted on a video camera body 1.

Figure 2 shows that the video camera body 1 comprises a lens 15, a viewfinder 16, an eyecup 17, and a video cassette tape compartment portion 18. A grip 12 is detachably attached to the bottom surface of the video camera body 1. A standby switch 4 is provided on a side wall of the video camera body 1 for placing the video camera apparatus in a standby mode. The standby switch 4 powers the video camera apparatus and a remote control jack 6. Although the video camera body 1 also includes various kinds of drive devices for setting the lens 15, for example, in a zoom-up mode, and various kinds of circuits, for the sake of simplicity the drive devices are not shown in Figure 1.

Referring to Figure 1, one side 4A of the standby switch 4 is coupled to a terminal 100 to which a positive voltage +B is supplied by a voltage source (not shown). The other side 4B of the standby switch 4 is coupled to a voltage source terminal 6A of the remote control jack 6. A remote control signal terminal 6B of the remote control jack 6 is connected to a microcomputer 4a provided in the video camera body 1. This microcomputer 4a will hereinafter be referred to as a central processing unit (CPU1) for simplicity. The CPU1 4a controls the ON or OFF operation of the standby switch 4.

When the grip 12 is not attached to the bottom surface of the video camera body 1 and the standby switch 4 is turned ON in a manual fashion, the voltage from the voltage source is supplied to respective circuits within the video camera body 1, whereby the video camera apparatus is set into various kinds of modes, for example into the standby mode for picking up an image. If the user further depresses the standby switch 4, the video camera apparatus is then set into a shooting mode.

When the grip 12 is attached to the video camera body 1 and the user takes a picture with the video camera body 1 by using a remote control operation portion of the grip 12, without the video light apparatus, the user inserts a plug 14a, which is provided at an end of a lead wire 14 which is connected to the grip 12, into the remote control jack 6 of the video camera body 1. Then, the user can take a picture in a zoom-up mode, in a normal mode or the like by operating the remote control operation portion of the grip 12. The grip 12 incorporates therein a second microcomputer also operating as a central processing unit 12a (hereinafter simply referred to as the CPU2) to control various operations of the video camera body 1 through a remote control signal.

The video camera apparatus is mainly constituted by the video camera body 1 and the grip 12 which effect various remote control operations as described above. In this embodiment, the video camera apparatus is additionally provided with the video light apparatus 2.

The video light apparatus 2 is detachably mounted on top of the video camera body 1 as shown in Figure 2. Referring to Figure 2, the video light apparatus 2 is provided with a DC voltage source 3 formed as a rechargeable, secondary battery or the like which is detachably mounted on the rear surface of a housing 11 of the video light apparatus 2. The DC voltage source 3 will be described more fully below.

Referring back to Figure 1, an anode of the DC voltage source 3 is connected to a movable contact 7a of a change-over switch 7 to switch the video light apparatus between a remote control mode and a manual mode. Fixed contacts 7b and 7c of the change-over switch 7 act as a remote control contact and an OFF contact, respectively, while a fixed contact 7d acts as manual-ON contact of the change-over switch 7. The fixed contact 7b of the change-over switch 7 is connected to a movable contact 48b of a switch 48a, which switch is automatically turned ON and OFF in response to an output signal Sd from a detecting circuit 48. A fixed contact 48c of the switch 48a is connected to the fixed contact 7d of the switch 7 and to a movable contact 8a of a lamp change-over switch 8. The lamp change-over switch 8 has fixed contacts 8b and 8c. The fixed contact 8b is connected to a cathode of the DC voltage source 3 via a first metal halide lamp 9. A second metal halid lamp 10 is provided.

The change-over switches 7 and 8 are provided on a side wall of the housing 11 of the video light apparatus 2 as shown in Figure 2. A jack 13 is also provided in the side wall of the housing 11. A lead wire 5 from the video light apparatus 2 has a plug 5a formed at an end thereof and extends from a side wall of the housing 11, which side wall is next to the side wall of the housing 11 in which the switches 7 and 8 and the jack 13 are located. In this embodiment, the plug 14a, formed at the end of the lead wire 14 from the grip 12, is coupled to the jack 13 in the video light apparatus. The jack 13 comprises a voltage source terminal 13A, a remote control signal terminal 13B and a ground terminal 13C.

In the circuit arrangement shown in Figure 1, voltage from the voltage terminals 6A or 13A is supplied to the detecting circuit 48, so that the +B voltage from the voltage source (not shown) can be detected by the detecting circuit 48. The switch 48a is automatically turned ON in response to an output signal Sd from the detecting circuit 48. When the grip 12 is not attached to the video camera body 1 or when the grip remote control operation is not carried out, the plug 5a connected to the end of the lead wire 5 of the video light apparatus 2 is inserted into the jack 6 of the video camera body 1. In this state, if the movable contact 7a of the change-over switch 7 is connected to the remote control fixed contact 7b and the movable contact 8a of the change-over switch 8 is connected to the fixed contact 8b and the standby switch 4 of the video camera body 1 is manually operated, the voltage of the internal camera voltage source (not shown) is supplied through the voltage source terminal 6A of the jack 6 and the lead wire 5 to the detecting circuit 48 within the video light apparatus 2, whereby the detecting circuit 48 detects the existence of the voltage. If the detecting circuit 48 detects the existence of the voltage source voltage +B, the detecting circuit 48 causes the switch 48a to be turned ON and the movable contact 8a to be connected to the fixed contact 8b, whereby the first and second metal halide lamps 9 and 10 are turned ON simultaneously.

If the movable contact 8a of the change-over switch 8 is connected to the fixed contact 8c, then only the second metal halide lamp 10 is turned ON when the detecting circuit 48 detects the +B voltage. Thus, it is possible to control the brightness of the light produced by the video light apparatus 2.

If the video light apparatus 2 is detached from the video camera body 1 to be used as a conventional flashlight and the change over switch 7 is turned ON for the manual mode, the movable contact 7a of the change-over switch 7 is connected to the fixed contact 7d. Therefore, the metal halide lamps 9 and 10 can be turned ON and OFF in a manual fashion.

When the grip 12 is attached to the video camera body 1 to perform the grip remote control operation, the plug 14a, connected to the end of the lead wire 14 which extends from the grip 12, must be inserted into the jack 13 of the video light apparatus 2, and the plug 5a, connected to the end of the lead wire 5 which extends from the video light apparatus 2, must be inserted into the jack 6 on the video camera body 1. Further, under this condition, if the video camera body 1 is placed in the standby mode by the remote control operation portion (not shown) of the grip 12, then the remote control signal from the grip 12 is supplied over a signal path which comprises the lead wire 14, the plug 14a, the jack 13, the lead wire 5, the plug 5a, and the jack 6, to the CPU1 4a. The CPU1 4a then turns ON the standby switch 4 of the video camera body 1. The positive voltage source voltage +B is supplied to the video light apparatus 2 over a conductive path comprising the voltage source terminal 100, the standby switch 4, the voltage source terminal 6A of the jack 6, the plug 5a, and the lead wire 5, to the detecting circuit 48, so that the detecting circuit 48 detects the source voltage and turns the switch 48a ON. Furthermore, various other operations within the video camera body 1 can be controlled by the grip 12 through the grip remote control operation.

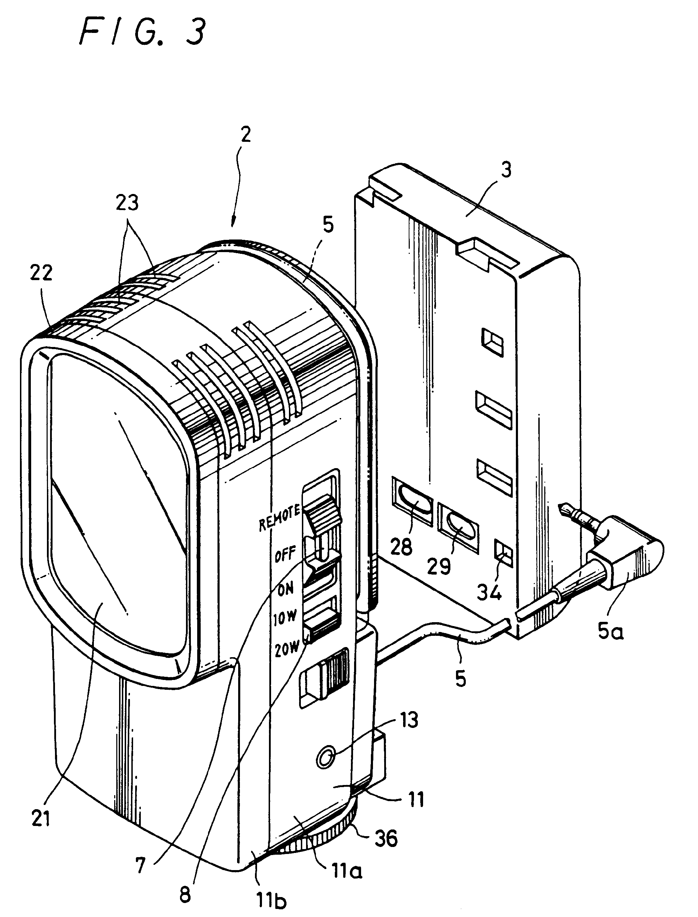

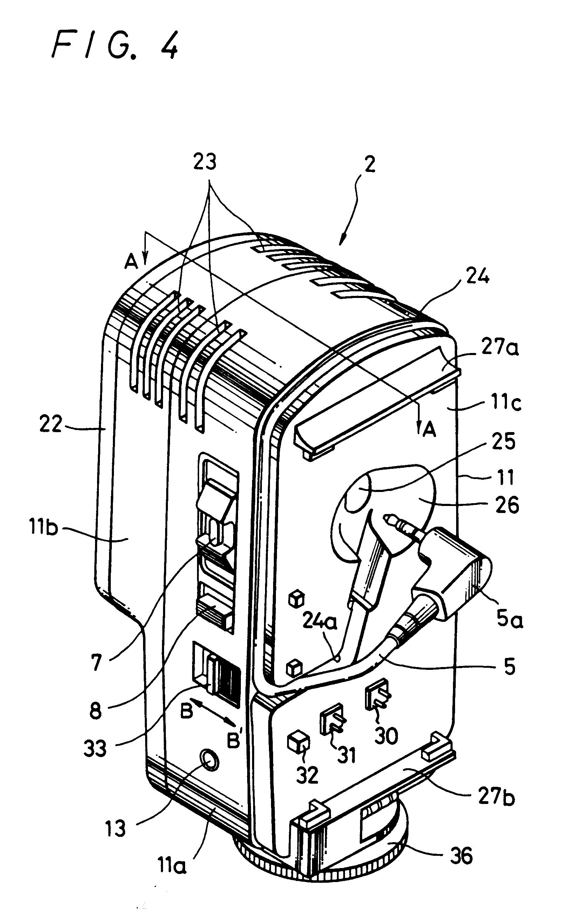

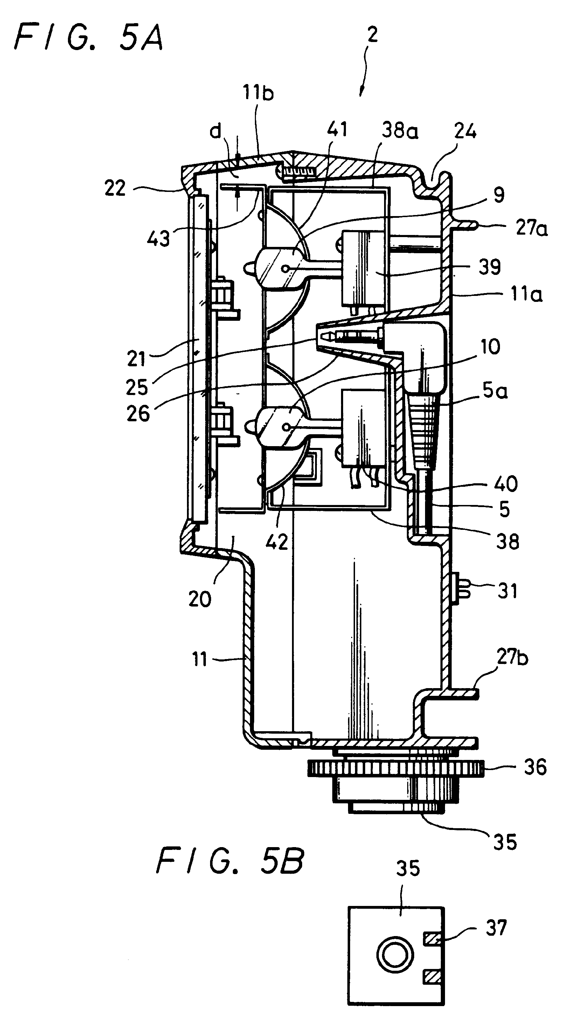

The video light apparatus 2 will now be described in more detail with reference to Figures 3 to 5B, in which Figure 3 is a front perspective view of the video light apparatus, Figure 4 is a rear perspective view of the video light apparatus, Figure 5A is a side view of a section taken along a section line A-A in Figure 4, and Figure 5B is a bottom view of a slide plug thereof.

Referring to Figures 3 to 5, the housing 11 of the video light apparatus 2 is formed of a synthetic resin or the like and is shaped as a rectangular box. The housing 11 comprises a housing body 11a and a removable front panel or lid 11b. Underneath the front panel 11b is a generally open space or portion 20, as shown in Figure 5A. A frame 22 having a frosted glass 21 is engaged with the front panel 11b and is detachably secured to the front panel 11b so as to cover the open space 20. Light is irradiated onto an object (not shown) from the metal halide lamps 9 and 10 through the frosted glass 21 of the frame 22.

Heat radiation slots 23 are formed through upper portions of the housing body 11a and the front panel 11b so as to radiate heat generated by the metal halide lamps 9 and 10. The change-over switch 7, the lamp change-over switch 8 and the jack 13 are provided on a right side wall of the housing body 11a, as shown in Figure 3. If the change-over switch 7 is moved to the remote control position, the metal halide lamps 9 and 10 are automatically turned ON and OFF in relation to the standby operation of the video camera body 1. The metal halide lamps 9 and 10 may also be turned ON and OFF in a manual fashion. Further, if the lamp change-over switch 8 is moved to a 10 W position, only the metal halide lamp 10 will be lit, while if the switch 8 is moved to a 20 W position, both the metal halide lamps 9 and 10 will be lit at the same time.

The jack 13 is supplied with the remote control signal from the grip 12 of the video camera body 1 through the lead wire 14 and the plug 14a. In this form of implementation, the lead wire 5 connected to the plug 5a is led out from the left side wall of the housing body 11a. The lead wire 5 is inserted into a guide slot 24 formed on the rear side surface of the housing body 11a such that the lead wire 5 is laid along the guide slot 24 so as substantially to encircle half of the left side surface, the upper surface, and the right side surface of the housing body 11a. Further, the lead wire 5 can be inserted into a guide slot 24a (see Figure 4) formed on the rear surface 11c of housing body 11a and the plug 5a can be inserted into a plug supporting portion 26. Thus, the lead wire 5 and plug 5a can be neatly stored.

Further, a pair of supporting members 27a and 27b are provided on the rear surface 11c of the housing body 11a at upper and lower ends thereof so as to extend perpendicularly across the rear surface 11c to detachably hold therebetween the DC power source 3, formed as a rechargeable secondary battery. Furthermore, contact pins 30 and 31 are provided on the rear surface 11c of the housing body 11a to make electrical connection with the cathode and anode 28 and 29 (see Figure 3) of the DC power source 3.

A locating member 32 is provided on the rear surface 11c of the housing body 11a, as shown in Figure 4, to locate the DC power source 3 correctly relative to the rear surface 11a. A slidable lever 33 is provided at the side wall of the housing body 11a, such that when the slidable lever is moved in the direction shown by an arrow B in Figure 4 the locating member 32 is moved towards the housing body 11a as shown in Figure 4 such that the end of the locating member 32 is flush with the rear surface 11c of the housing body 11a. In this state, if the DC power source 3 shown in Figure 3 is engaged between the supporting members 27a and 27b and the slidable lever 33 is moved (in the direction of the arrow B′) towards the frame 22 in Figure 4, the locating member 32 protrudes from the housing 11c as shown in Figure 4 and is engaged with a recess 34 formed in the front surface of the DC power source 3 as shown in Figure 3, whereby the DC power source 3 is held stably to the housing body 11a.

A slide plug 35 is formed on the bottom surface of the housing body 11a of the video light apparatus 2, as shown in Figure 5A. This slide plug 35 is inserted into a camera shoe, that is a so-called hot shoe 19 provided on a front upper portion of the camera body 1 as shown in Figure 2. As shown in Figure 5B, the slide plug 35 is provided with a control terminal 37 by which the video light apparatus 2 is electrically connected with the video camera body 1. The detected signal and the control signal may be connected through the control terminal 37. The slide plug is tightly fastened to the video camera body 1 by rotating a knob 36 attached to the bottom portion of the video light apparatus 2.

Within the video light apparatus 2, a chassis 38 that is substantially U-shaped in cross-section is secured to the rear surface of the housing body 11a as shown in Figure 5A. Sockets 39 and 40 are provided on the chassis 38 and the metal halide lamps 9 and 10 are inserted into the sockets 39 and 40, respectively. The plug supporting portion 26 is shaped as a cone and is formed on the rear surface of the housing body 11a. The plug supporting portion 26 is projected into the chassis 38 through an opening 25 bored through the chassis 38. Light reflecting plates 41, 42 of hemispherical shape are formed in the schassis 38. A heat radiating plate 43 is provided on the front surface of the chassis 38 with a predetermined spacing d between the housing body 11a and the upper surface of the front panel 11b, whereby the housing body 11a and the front panel 11b, which are made of synthetic resin, are prevented from being directly heated by heat generated by the metal halide lamps 9 and 10. The heat is prevented from reaching the synthetic resin by both the heat radiating plate 43 and an upper surface portion 38a of the chassis 38.

In the above-described video camera apparatus, when the video camera body 1 or the grip 12 is set in the standby mode, the metal halide lamps 9 and 10 are automatically turned ON, thereby making the video camera apparatus easier to operate.

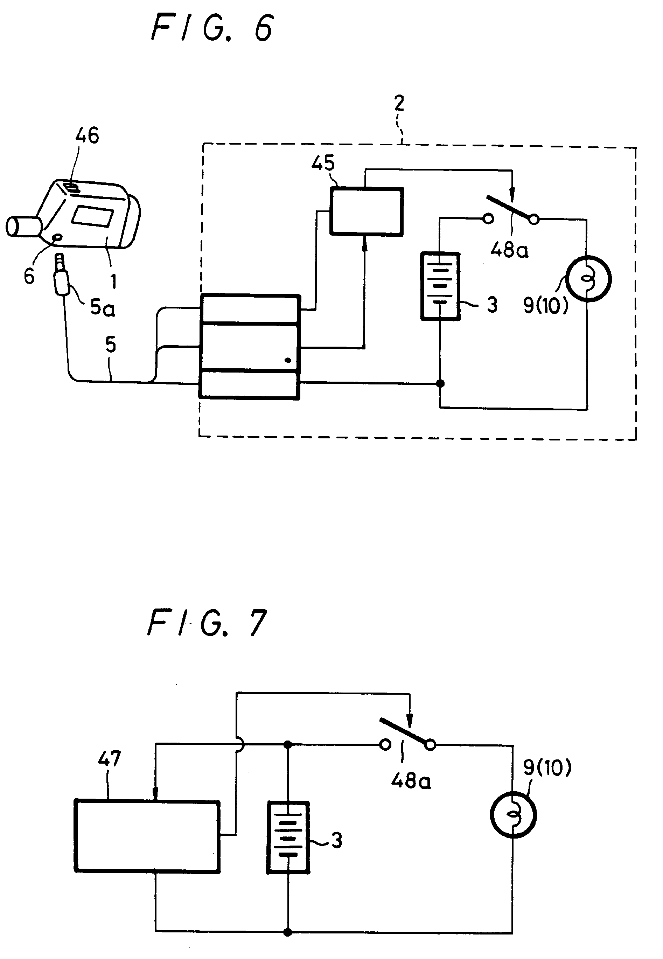

Figure 6 is a schematic diagram showing another embodiment of the invention. In the above-described embodiment, while the voltage from the voltage source of the video camera body 1 is detected by the detecting circuit 48 thereby to control the change-over switch 48a as shown in Figure 1, another variation is also possible as shown in Figure 6. More specifically, as shown in Figure 6, a third microcomputer (hereinafter referred to as CPU3) operating as a central processing unit 45 is provided within the video light apparatus 2 and the CPU3 is supplied with the remote control signal and the voltage from the voltage source, from the remote control jack 6 or a hot shoe 46 on the video camera body 1. In this embodiment, the switch 48a is turned ON and OFF by a control signal from the CPU3 45 provided within the video light apparatus 2.

Figure 7 shows a DC voltage source protecting circuit which can be provided in the video light apparatus 2. As shown in Figure 7, a battery voltage detecting circuit 47 is provided within the video light apparatus 2 in order to remove a so-called memory effect in which the storage capacity is lowered by a repetitive small charge or discharge of the DC voltage source 3 formed as a secondary battery. That is, the battery voltage detecting circuit 47 detects the voltage across the DC voltage source 3 and, when the voltage becomes about 5V, it automatically turns OFF the metal halide lamps 9 and 10.

In the above-described video camera apparatus, since the metal halide lamps 9 and 10 provided within the video light apparatus 2 are automatically turned ON or OFF by operating the standby switch 4 of the video camera body 1, the user is free from the cumbersome and time consuming operation of constantly turning ON the power switch when the user takes a picture and turning the power switch OFF when the camera is not in use. Further, since the metal halide lamps 9 and 10 need not be turned ON before the video camera apparatus is set in the standby mode, it is possible to prevent the power of the DC voltage source 3 from being inefficiently consumed.

## Claims

1. A video camera apparatus comprising:
a video camera body (1);
a video light apparatus (2);
a switch (4) mounted to the camera body (1) for controlling the video camera apparatus;
a detection circuit (48; 45) responsive to operation of said switch (4); and
power switching means (48a) arranged in the video light apparatus (2) for controlling energisation of the video light apparatus in response to detection by said detection circuit (48; 45) of operation of said switch (4);
characterised in that:
the video light apparatus (2) is detachably connected to the video camera body (1);
said switch (4) is a standby switch for setting a standby mode of the video camera apparatus;
a remote control unit (12) is detachably connected to the video camera body (1) for producing a remote control standby signal;
standby switch control means (4a) is responsive to said remote control standby signal for actuating said standby switch (4);
said detection circuit (48; 45) is a standby mode detection circuit and is responsive to said standby switch (4) for detecting said standby mode of the video camera apparatus; and
said power switching means (48a) is operative to control energisation of the video light apparatus (2) in response to said standby mode detection circuit (48; 45) detecting said standby switch (4) being set in said standby mode.

2. A video camera apparatus according to claim 1, wherein the video light apparatus (2) includes light switching means (8) for selectively switching the output brightness of the video light apparatus (2) when the video light apparatus is switched ON.

3. A video camera apparatus according to claim 1 or claim 2, wherein the video light apparatus (2) includes a housing (11) having DC voltage source attaching means (27a, 27b) formed on a side surface (11c) thereof for attaching a DC voltage source (3) to the video light apparatus (2).

4. A video camera apparatus according to claim 3, wherein the video light apparatus (2) comprises a connection cord accommodating portion (24a) formed on said side surface (11c) of the housing (11) for accommodating a connection cord (5).

5. A video camera apparatus according to any one of the preceding claims, comprising a DC voltage source (3) and DC voltage source detecting means (47) for detecting a DC voltage discharge of said DC voltage source and for switching OFF the video light apparatus (2) in response to detecting said DC voltage discharge.

## Patentansprüche

1. Videokameragerät, das folgendes aufweist:
einen Videokamerakörper (1);
ein Videobeleuchtungsgerät (2);
einen am Kamerakörper (1) befestigten Schalter (4) zur Steuerung des Video-kameragerätes;
eine Detektionsschaltung (48; 45), die auf die Betätigung des Schalters (4) anspricht; und
Leistungsschaltmittel (48a), das in dem Videobeleuchtungsgerät (2) angeordnet ist zur Steuerung der Energieversorgung des Videobeleuchtungsgerätes, als Antwort auf die Detektion der Betätigung des besagten Schalters (4) durch die Detektionsschaltung (48; 45);
**dadurch gekennzeichnet**, daß:
das Videobeleuchtungsgerät (2) lösbar mit dem Videokamerakörper (1) verbunden ist;
der besagte Schalter (4) ein Standby-Schalter ist, zum Setzen eines Standby-Modes des Videokameragerätes;
eine Fernsteuereinheit (12) lösbar mit dem Videokamerakörper (1) zur Erzeugung eines Fernsteuer-Standby-Signales verbunden ist;
ein Standby-Steuermittel (4a) auf das Fernsteuer-Standby-Signal anspricht, um den Standby-Schalter (4) zu betätigen;
die besagte Detektionsschaltung (48; 45) eine Standby-Mode Detektionsschaltung ist und auf den besagten Standby-Schalter (4) zur Detektion des Standby-Modes des Videokameragerätes anspricht; und
das Leistungsschaltmittel (48a) funktionsfähig ist, um die Energieversorgung des Videobeleuchtungsgerätes (2) in Abhängigkeit von der Standby-Mode Detektionsschaltung (48; 45) zu steuern, die detektiert, ob der Standby-Schalter (4) in den besagten Standby-Mode gesetzt ist.

2. Videokameragerät nach Anspruch 1, wobei das Videobeleuchtungsgerät (2) Lichtschaltmittel (8) beinhaltet zur selektiven Schaltung der Ausgangshelligkeit des Videobeleuchtungsgerätes (2), wenn das Videobeleuchtungsgerät EIN-geschaltet ist.

3. Videokameragerät nach Anspruch 1 oder 2, wobei das Videobeleuchtungsgerät (2) ein Gehäuse (11) beinhaltet mit Befestigungsmitteln (27a, 27b) für die DC-Spannungsquelle, die auf einer seitlichen Oberfläche (11c) desselben ausgebildet sind zur Befestigung einer DC-Spannungsquelle (3) an dem Videobeleuchtungsgerät (2).

4. Videokameragerät nach Anspruch 3, wobei das Videobeleuchtungsgerät (2) ein Verbindungskabelunterbringungsteil (24a) aufweist, das auf der besagten seitlichen Oberfläche (11c) des Gehäuses (11) zur Unterbringung eines Verbindungskabels (5) ausgebildet ist.

5. Videokameragerät nach einem der vorhergehenden Ansprüche, das eine DC-Spannungsquelle (3) und DC-Spannungsquellen-Detektionsmittel (47) aufweist zur Detektion einer DC-Spannungsentladung der besagten DC-Spannungsquelle und zum AUS-Schalten des Videobeleuchtungsgeräts (2) in Abhängigkeit von der Detektion der besagten DC-Spannungsentladung.

## Revendications

1. Dispositif de caméra vidéo comprenant :
un corps de caméra vidéo (1) ;
un dispositif d'éclairage vidéo (2) ;
un interrupteur (4) monté sur le corps de caméra (1) pour commander le dispositif de caméra vidéo ;
un circuit de détection (48 ; 45) sensible à la manoeuvre dudit interrupteur (4) ; et
un moyen interrupteur de puissance (48a) disposé dans le dispositif d'éclairage vidéo (2) pour commander l'alimentation du dispositif d'éclairage vidéo en réponse à la détection, par ledit circuit de détection (48 ; 45) de la manoeuvre dudit interrupteur (4) ;
caractérisé en ce que :
le dispositif d'éclairage vidéo (2) est relié de façon démontable au corps de caméra vidéo (1) ;
en ce que ledit interrupteur (4) est un interrupteur de mise en attente pour établir un mode d'attente du dispositif de caméra vidéo ;
en ce qu'un module de commande à distance (12) est raccordé de façon amovible au corps de caméra vidéo (1) pour produire un signal d'attente de commande à distance ;
en ce qu'un moyen de commande d'interrupteur de mise en attente (4a) est sensible audit signal d'attente de commande à distance pour actionner ledit interrupteur de mise en attente (4) ;
en ce que ledit circuit de détection (48 ; 45) est un circuit de détection de mode d'attente et est sensible audit interrupteur de mise en attente (4) pour détecter ledit mode d'attente du dispositif de caméra vidéo ; et
en ce que ledit moyen interrupteur de puissance (48a) sert à commander l'alimentation du dispositif d'éclairage vidéo (2) en réponse à la détection, par ledit circuit de détection de mode d'attente (48 ; 45), du fait que ledit interrupteur de mise en attente (4) a été placé dans ledit mode d'attente.

2. Dispositif de caméra vidéo selon la revendication 1, dans lequel le dispositif d'éclairage vidéo (2) comprend un moyen formant interrupteur d'éclairage (8) pour commander de manière sélective la luminosité de sortie du dispositif d'éclairage vidéo (2) lorsque le dispositif d'éclairage vidéo est allumé.

3. Dispositif de caméra vidéo selon la revendication 1 ou la revendication 2, dans lequel le dispositif d'éclairage vidéo (2) comprend un boîtier (11) possédant un moyen de fixation de source de tension continue (27a, 27b) formé sur l'une de ses surfaces latérales (11c) pour fixer une source de tension continue (3) au dispositif d'éclairage vidéo (2).

4. Dispositif de caméra vidéo selon la revendication 3, dans lequel le dispositif d'éclairage vidéo (2) comprend une partie de logement de cordon de raccordement (24a) formée sur ladite surface latérale (11c) du boîtier (11) pour loger un cordon de raccordement (5).

5. Dispositif de caméra vidéo selon l'une quelconque des revendications précédentes, comprenant une source de tension continue (3) et un moyen de détection de source de tension continue (47) pour détecter la décharge de la tension continue de ladite source de tension continue et pour couper le dispositif d'éclairage vidéo (2) en réponse à la détection de ladite décharge de la tension continue.
